# EUROPEAN PATENT APPLICATION

(11) **EP 4 664 708 A1**
(43) Date of publication of application: **17.12.2025**
(21) Application number: 24181986.1
(22) Date of filing: 13.06.2024
(51) Int. Cl.: H02J 3/38

(54) **DIRECTIONAL ELECTRIC POWER TRANSMISSION CONTROL SYSTEM**

(71) Applicant: Deng, Junping, Gaozhou City Guangdong Province (CN)
(72) Inventor: Deng, Junping, Gaozhou City Guangdong Province (CN)
(74) Representative: Chung, Hoi Kan

(57) **Abstract**

Disclosed is a directional electric power transmission control system, including a busbar, a level sensor, a distributed power controller, and a load, where the level sensor and the distributed power controller are connected in parallel and connected with the load in series through a switch, the level sensor and the distributed power controller are in signal connection, and the busbar is provided with measuring points A, E and B, where the point A is located on one side close to the level sensor, the point B is located on one side close to the distributed power controller, and the point E is located between the point A and the point B and is connected to the load through the switch. The present disclosure adopts the principle of controlling grid levels, and achieves microgrid control and grid-connected control, power dispatching and automated management.

## Description

### TECHNICAL FIELD

The present disclosure belongs to the technical field of electrical engineering, and particularly relates to a directional electric power transmission control system.

### BACKGROUND

Distributed generation refers to the configuration of smaller generator units (with a power generation capacity of generally less than 30 MW) at or near user sites (electricity consumption) to meet the needs of specific users or support the economic operation of existing distribution networks, or to meet the requirements in the two aspects. These smaller generator units include fuel cells, small gas turbines, small photovoltaic power generation devices, small wind-solar complementary power generation devices, or hybrid devices of gas turbines and fuel cells. Service reliability and power quality are improved due to proximity to users. A combination of technological development, public environmental policies and electricity market expansion has made distributed generation become an important energy choice in the new century.

The combination of the distributed generation and centralized power supply system has the following advantages: in the distributed generation system, power stations are independent of each other, and users can control them at the discretion of their own, so that there will be no large-scale power outages, thereby ensuring relatively high safety and reliability; distributed generation is capable for making up for the shortcomings of large power grids in safety and stability, and makes it possible to continue power supply in the event of any unexpected disaster, thus having become an indispensable supplement to centralized power supply; distributed generation enables real-time monitoring of quality and performance of regional power supply, which is very suitable for power supply to rural, pastoral and mountainous areas, developing medium and small cities or commercial areas, and greatly reduces the pressure on environmental protection; distributed generation features very low or even no transmission and distribution losses, no need to build power distribution stations, low or no additional transmission and distribution costs, and also low costs of civil construction and installation; distributed generation can meet the needs of special occasions, and for example, mobile distributed generation vehicles (in a hot standby state) can be used for power supply for important gatherings or celebrations; and due to good peaking performance and operability, and less systems involved in operation, distributed generation devices can be started and stopped quickly in a full automatic manner.

By different primary energy sources used, distributed generation can be divided into fossil energy-based distributed generation, renewable energy-based distributed generation, and hybrid distributed generation.
(1) The fossil energy-based distributed generation mainly involves the following three technologies: 1) reciprocating engine technology: reciprocating engines used for distributed generation are usually four-stroke ignition or compression ignition engines fueled by gasoline or diesel, which are most widely used for distributed generation currently. However, this distributed generation method will have a negative impact on surrounding environments, but through technical improvement, pollutions from noise and exhaust emissions have been greatly reduced. 2) Micro gas turbine technology: Micro gas turbines refer to ultra-small gas turbines with a power of several hundred kilowatts or less that are fueled by natural gas, methane, gasoline and diesel. However, compared with other existing power generation technologies, micro gas turbines have lower efficiency. The operation efficiency at full load is only 30%, and the operation efficiency at half load is only 10%-15%. Therefore, waste heat from the equipment is usually utilized through a household cogeneration method, which improves the efficiency. In 2012, foreign countries started the demonstration application of the micro gas turbine technology, with a focus on the technologies of high-speed bearings, high-temperature materials and component processing. 3) Fuel cell technology: A fuel cell is an electrochemical device that directly converts chemical energy into direct current as an electric current under isothermal conditions. When the fuel cell works, no combustion is needed, so that environmental pollution is avoided, and its electrical energy is obtained in an electrochemical process. Hydrogen fuel is fed into an anode of the fuel cell, and air enters the fuel cell through a cathode. The two substances are separated by an electrolyte. In the process of obtaining electrical energy, some by-products are generated, only including heat, water, carbon dioxide, etc. A hydrogen fuel can be obtained through steam reforming or oxidation of various hydrocarbon sources under pressure. Therefore, the fuel cell is a promising, clean and efficient tool for power generation, and is known as a distributed power supply in the 21st century.
(2) The renewable energy-based distributed generation mainly involves the following technologies: 1) Solar photovoltaic power generation technology:
   Solar photovoltaic power generation technology directly converts solar energy into electrical energy by utilizing the photoelectric effect of semiconductor materials. Photovoltaic power generation has the advantages of no fuel consumption, no geographical restrictions, flexible scale, no pollution, safety and reliability, simple maintenance, etc. However, the cost of such distributed generation technology is very high, so currently the solar photovoltaic power generation technology needs to be technically improved to reduce costs and make it suitable for wide application. 2) Wind power generation technology is a power generation technology that converts wind energy into electric energy. Wind power generation devices are divided into two types by operation modes (independent operation and grid-connected operation). Those in independent operation refer to miniature or small wind turbine generator units with a capacity of 100 W-10 kW, and those in grid-connected operation usually have a capacity of more than 150 kW. The wind power generation technology has progressed rapidly, and the technology of wind power generation with a unit capacity below 2 MW has been very mature.
(3) The hybrid distributed generation technology generally refers to a combination of two or more distributed generation technologies and energy storage devices to form a composite power generation system. Various forms of hybrid power generation systems have been proposed, one of which is the multi-objective distributed energy supply system of Combined Cooling, Heating and Power (CCHP), which is commonly known as the distributed energy supply system. While generating electricity, the distributed energy supply system is capable of providing thermal energy or meeting the needs of heating and cooling. Compared with a simple power supply system, the distributed energy supply system can greatly improve energy utilization, reduce environmental pollution, and improve the thermal economy of the system.

Distributed generation technologies include the technologies of solar power generation, micro gas turbine power generation, fuel cell power generation and wind power generation. These technologies are characterized by low investment, flexible power generation, environmental compatibility, and unparalleled reliability and economy of traditional power systems. Therefore, in recent years, more and more distributed generation (DG) technologies have been applied to existing power grids, and the rapid application of DG technologies has also had some adverse effects:
1) the DG complicates line voltage regulation;
2) the DG makes relay protection selection and configuration difficult;
3) the DG increases the short-circuit capacity of power grid, making it easy to damage the equipment in the event of a fault; and
4) the DG affects the power quality significantly.

Of course, the DG might also affect the design of the grounding system. When the total capacity of a power grid reaches a certain level, the frequency and stability of the power grid might be affected. Due to its small capacity and great operational uncertainty, the DG maybe is not directly dispatched through the power system. Some DGs are restricted by natural conditions and lack flexible controllability. Each node of the DG is separated by a circuit breaker, and manual switching is required, so that the objective of intelligently transmitting power cannot be achieved. If an energy manager is used, circuit control is quite complicated, and automation controllability and stability are poor.

### SUMMARY

An objective of the present disclosure is to provide a directional electric power transmission control system, so as to solve problems mentioned in the background art.

To achieve the above obj ective, the present disclosure adopts the following technical solution: a directional electric power transmission control system, including a busbar, a level sensor (S1), a distributed power controller (S2), and a load (RL), where the level sensor (S1) and the distributed power controller (S2) are connected in parallel and connected with the load (RL) in series through a switch (Q1), the level sensor (S1) and the distributed power controller (S2) are in signal connection, and the busbar is provided with measuring points A, E and B, where the point A is located on one side close to the level sensor (S1), the point B is located on one side close to the distributed power controller (S2), and the point E is located between the point A and the point B and is connected to the load (RL) through the switch (Q1).

Preferably, the busbar is connected to a photovoltaic assembly, and the photovoltaic assembly is configured to convert solar energy into electrical energy.

Compared with the prior art, the present disclosure adopts the principle of controlling grid levels, and achieves microgrid control and grid-connected control, power dispatching and automated management without need to change original lines, add other related equipment, and separate each distributed generation (DG) point with a circuit breaker.

### BRIEF DESCRIPTION OF DRAWINGS

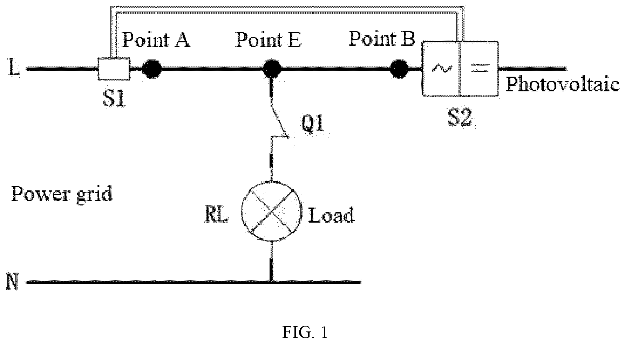

FIG. 1 is a structural schematic diagram of the present disclosure.

### DETAILED DESCRIPTION OF THE EMBODIMENTS

The present disclosure is further explained below with reference to the accompanying drawings, which is not intended to limit the protection scope of the present disclosure.

In the description of the present disclosure, it is to be noted that the terms "up", "down", "left", "right", "inside", "outside" and the like indicate azimuthal or positional relations based on those shown in the drawings only for ease of description of the present disclosure and for simplicity of description, and are not intended to indicate or imply that the referenced device or element must have a particular orientation and be constructed and operative in a particular orientation, and thus may not be construed as a limitation on the present disclosure.

With reference to FIG. 1, the present disclosure provides a technical solution: a directional electric power transmission control system, including a busbar, a level sensor (S1), a distributed power controller (S2), and a load (RL), where the level sensor (S1) and the distributed power controller (S2) are connected in parallel and connected with the load (RL) in series through a switch (Q1), the level sensor (S1) and the distributed power controller (S2) are in signal connection, and the busbar is provided with measuring points A, E and B, where the point A is located on one side close to the level sensor (S1), the point B is located on one side close to the distributed power controller (S2), and the point E is located between the point A and the point B and is connected to the load (RL) through the switch (Q1).

In this embodiment, the busbar is connected to a photovoltaic assembly, and the photovoltaic assembly is configured to convert solar energy into electrical energy.

Distributed generation refers to the configuration of smaller generator units (with a power generation capacity of generally less than 30 MW) at or near user sites (electricity consumption) to meet the needs of specific users or support the economic operation of existing distribution networks, or to meet the requirements in the two aspects. These smaller generator units include fuel cells, small gas turbines, small photovoltaic power generation devices, small wind-solar complementary power generation devices, or hybrid devices of gas turbines and fuel cells. Service reliability and power quality are improved due to proximity to users. A combination of technological development, public environmental policies and electricity market expansion has made distributed generation become an important energy choice in the new century.

The combination of the distributed generation and centralized power supply system has the following advantages: in the distributed generation system, power stations are independent of each other, and users can control them at the discretion of their own, so that there will be no large-scale power outages, thereby ensuring relatively high safety and reliability; distributed generation is capable for making up for the shortcomings of large power grids in safety and stability, and makes it possible to continue power supply in the event of any unexpected disaster, thus having become an indispensable supplement to centralized power supply; distributed generation enables real-time monitoring of quality and performance of regional power supply, which is very suitable for power supply to rural, pastoral and mountainous areas, developing medium and small cities or commercial areas, and greatly reduces the pressure on environmental protection; distributed generation features very low or even no transmission and distribution losses, no need to build power distribution stations, low or no additional transmission and distribution costs, and also low costs of civil construction and installation; distributed generation can meet the needs of special occasions, and for example, mobile distributed generation vehicles (in a hot standby state) can be used for power supply for important gatherings or celebrations; and due to good peaking performance and operability, and less systems involved in operation, distributed generation devices can be started and stopped quickly in a full automatic manner.

By different primary energy sources used, distributed generation can be divided into fossil energy-based distributed generation, renewable energy-based distributed generation, and hybrid distributed generation.
(1) The fossil energy-based distributed generation mainly involves the following three technologies: 1) reciprocating engine technology: reciprocating engines used for distributed generation are usually four-stroke ignition or compression ignition engines fueled by gasoline or diesel, which are most widely used for distributed generation currently. However, this distributed generation method will have a negative impact on surrounding environments, but through technical improvement, pollutions from noise and exhaust emissions have been greatly reduced. 2) Micro gas turbine technology: Micro gas turbines refer to ultra-small gas turbines with a power of several hundred kilowatts or less that are fueled by natural gas, methane, gasoline and diesel.
   However, compared with other existing power generation technologies, micro gas turbines have lower efficiency. The operation efficiency at full load is only 30%, and the operation efficiency at half load is only 10%-15%. Therefore, waste heat from the equipment is usually utilized through a household cogeneration method, which improves the efficiency. In 2012, foreign countries started the demonstration application of the micro gas turbine technology, with a focus on the technologies of high-speed bearings, high-temperature materials and component processing. 3) Fuel cell technology: A fuel cell is an electrochemical device that directly converts chemical energy into direct current as an electric current under isothermal conditions. When the fuel cell works, no combustion is needed, so that environmental pollution is avoided, and its electrical energy is obtained in an electrochemical process. Hydrogen fuel is fed into an anode of the fuel cell, and air enters the fuel cell through a cathode. The two substances are separated by an electrolyte. In the process of obtaining electrical energy, some by-products are generated, only including heat, water, carbon dioxide, etc. A hydrogen fuel can be obtained through steam reforming or oxidation of various hydrocarbon sources under pressure. Therefore, the fuel cell is a promising, clean and efficient tool for power generation, and is known as a distributed power supply in the 21st century.
(2) The renewable energy-based distributed generation mainly involves the following technologies: 1) Solar photovoltaic power generation technology: solar photovoltaic power generation technology directly converts solar energy into electrical energy by utilizing the photoelectric effect of semiconductor materials. Photovoltaic power generation has the advantages of no fuel consumption, no geographical restrictions, flexible scale, no pollution, safety and reliability, simple maintenance, etc. However, the cost of such distributed generation technology is very high, so currently the solar photovoltaic power generation technology needs to be technically improved to reduce costs and make it suitable for wide application. 2) Wind power generation technology is a power generation technology that converts wind energy into electric energy. Wind power generation devices are divided into two types by operation modes (independent operation and grid-connected operation). Those in independent operation refer to miniature or small wind turbine generator units with a capacity of 100 W-10 kW, and those in grid-connected operation usually have a capacity of more than 150 kW. The wind power generation technology has progressed rapidly, and the technology of wind power generation with a unit capacity below 2 MW has been very mature.
(3) The hybrid distributed generation technology generally refers to a combination of two or more distributed generation technologies and energy storage devices to form a composite power generation system. Various forms of hybrid power generation systems have been proposed, one of which is the multi-objective distributed energy supply system of Combined Cooling, Heating and Power (CCHP), which is commonly known as the distributed energy supply system. While generating electricity, the distributed energy supply system is capable of providing thermal energy or meeting the needs of heating and cooling. Compared with a simple power supply system, the distributed energy supply system can greatly improve energy utilization, reduce environmental pollution, and improve the thermal economy of the system.

A level refers to a relative ratio of the amount of electricity between two or more points of an electric circuit under the same impedance.

A microgrid is defined as compared to the traditional large power grid, refers to a network composed of a plurality of distributed generation apparatuses and related loads according to a certain topological structure, and is connected to a conventional power grid through static switches.

The microgrid refers to a small-scale power generation and distribution system composed of distributed generation apparatuses, energy storage devices, energy conversion devices, related loads, and monitoring and protection devices. The microgrid is an autonomous system capable of achieving self-control, protection and management, which can operate in parallel with an external grid or in isolation. The microgrid is an important part of a smart grid. For the circuit, the principle of controlling a grid level is adopted. S1 refers to the level sensor, and S2 denotes the distributed power controller. When the switch Q1 is turned off, a value of current in the entire circuit is 0, and a voltage drop is also equal to 0. The levels of the point A, the point E and the point B are equal, and level data collected by the level sensor is sent to the distributed power controller S2, with a control output of zero.

When the switch Q1 is turned on, the current in the circuit instantaneously flows from the point A to the point E and then to the load RL, so that a voltage drop occurs at the point E. An internal resistance in a line (any line has an internal resistance) causes the level at the point E to decrease. Since there is no current flow at the point B, the level at the point B decreases together with the point E. In this case, the levels at the point E and the point B in the circuit are lower than the level at the point A, while the levels at the point E and the point B are equal.

When the level at the point B in the circuit is lower than the level at the point A, which is sensed by the level sensor S1, the collected data is sent to the distributed power controller S2. Because the level at the point A is higher than the levels at the point E and the point B, the distributed power controller S2 immediately starts outputting the current and sends it to the load RL through the switch Q1. When the power increases continuously, the levels at the point B and the point E are equal to the level at the point A, that is, when the output power of the distributed power controller S2 is equal to the load RL, the distributed power controller S2 stops the power output adjustment. In this case, the levels at the point A, the point E and the point B are equal, and the current from the point A to the point E is 0, and the current from the point B to the point E is equal to the current of the load RL.

As indicated above, only the level of the circuit needs to be sensed to control the output to the load RL. The current in the circuit only flows to the load RL. The entire circuit enables network connection and power separation without need to change original lines and add other related equipment. The present disclosure plays a crucial role in power dispatching and intelligent power control.

For a person skilled in the art, it is apparent that the present disclosure is not limited to the details of the above-mentioned exemplary embodiments, and the present disclosure can be implemented in other specific forms without departing from the spirit or basic features of the present disclosure. Therefore, no matter from which point of view, the embodiments should all be regarded as exemplary and non-limiting. The scope of the present disclosure is defined by the appended claims rather than the above-mentioned description, and therefore it is intended that all changes which fall within the meaning and scope of equivalency of the claims are embraced in the present disclosure. Any reference symbols in the claims should not be construed as limiting the claims to which they relate.

In addition, it should be understood that although the description is described according to implementations, each implementation does not include only one independent technical solution, the description is for clarity only, and those skilled in the art should take the description as a whole, the technical solutions in the various embodiments may be appropriately combined to form other implementations understandable by those skilled in the art.

## Claims

1. A directional electric power transmission control system, comprising a busbar, a level sensor (S1), a distributed power controller (S2), and a load (RL), wherein the level sensor (S 1) and the distributed power controller (S2) are connected in parallel and connected with the load (RL) in series through a switch (Q1), the level sensor (S1) and the distributed power controller (S2) are in signal connection, and the busbar is provided with measuring points A, E and B, wherein the point A is located on one side close to the level sensor (S 1), the point B is located on one side close to the distributed power controller (S2), and the point E is located between the point A and the point B and is connected to the load (RL) through the switch (Q1);when the switch Q1 is turned on, the current in the circuit instantaneously flows from the point A to the point E and then to the load RL, so that a voltage drop occurs at the point E; an internal resistance in a line causes the level at the point E to decrease; since there is no current flow at the point B, the level at the point B decreases together with the point E; in this case, the levels at the point E and the point B in the circuit are lower than the level at the point A, while the levels at the point E and the point B are equal; when the level at the point B in the circuit is lower than the level at the point A, which is sensed by the level sensor S1, the collected data is sent to the distributed power controller S2; because the level at the point A is higher than the levels at the point E and the point B, the distributed power controller S2 immediately starts outputting the current and sends it to the load RL through the switch Q1; when the power increases continuously, the levels at the point B and the point E are equal to the level at the point A, that is, when the output power of the distributed power controller S2 is equal to the load RL, the distributed power controller S2 stops the power output adjustment; and in this case, the levels at the point A, the point E and the point B are equal, and the current from the point A to the point E is 0, and the current from the point B to the point E is equal to the current of the load RL.

2. The directional electric power transmission control system according to claim 1, wherein the busbar is connected to a photovoltaic assembly, and the photovoltaic assembly is configured to convert solar energy into electrical energy.
